# EUROPEAN PATENT APPLICATION

(11) **EP 2 769 627 A1**
(43) Date of publication of application: **27.08.2014**
(21) Application number: 11852205.1
(22) Date of filing: 21.10.2011
(51) Int. Cl.: A23L 1/0524, A23L 2/02, A23L 2/52

(54) **METHOD FOR PRODUCING A CONCENTRATED JUICE-CONTAINING BEVERAGE ON THE BASIS OF LIQUID PECTIN**

(71) Applicant: Vasilyev, Pavel, 1051 Budapest (HU)
(72) Inventor: VASILIEV, Andrei, H-1052 Budapest (HU); DONCHENKO, Ljudmila, H-1056 Budapest (HU); TALOV, Mikhail, Otrpadnoe 187330 (RU)
(74) Representative: Varga, Tamas Péter
(86) International application number: PCT/HU2011/000101
(87) International publication number: WO 2013/057524

(57) **Abstract**

The invention relates to the food industry, namely the production of juice and soft drinks.

The inventive method comprises blending a certain ratio of liquid pectin, fruit or vegetable juice concentrate blending the mixture, filling into containers and packaging. Before filling flavors can be introduced. The method provides a simplified technology ensures quality, microbiological stability and diversification of such beverages. In addition, rounded flavour. The drink takes on the taste and aroma characteristic of juice, put into his recipe, without adding flavour.

## Description

The invention relates to the food industry, namely the production of juice and soft drinks.

There are various ways of preparing drinks based on fruit and vegetable juices which are resistant to microbial spoilage.

Thus, the known method of preparing a framework for fruit drink that provides mixing fruit juice with citric acid, ethyl alcohol, flavours, dyes, water (RF Patent N2033058, A 23 L 2 / 02). Lack - lots of sugar and additives that limit its use;

The closest to the proposed method is providing a concentrate of natural juices.

It is known that drink concentrates (base) is a mixture of concentrated juice, citric acid, essential oils and water. Beverage base is mixed with sugar syrup and water to give a blended syrup. In some cases, blended syrup to enhance the stability of beverages made by solution of sodium benzoate. Drinks vary in content of juice and sugar.

It is known that, to maintain quality of the juice is important to inactivate oxidative enzymes - polyphenol oxidase and peroxidase. Inactivate them, using sterilized and / or preservative additives. At the same time the yeast and bacteria are inhibited. However, spores of fungi and bacteria are surviving, and their ability to live manifests itself under favourable conditions (such as tightness of the package).

### Disadvantages - low nutritional value and their microbiological instability.

Object of the invention - broadening the range of non-alcoholic juice with certain functional characters, ensuring the microbiological stability of the product without adding any preservatives.

The purpose is realized by the proposed method, comprising mixing a liquid pectin with fruit or vegetable juice, concentration, filling into containers and packaging. With liquid pectin are introduced into the juice to concentrate the mixture, providing its content in the final product of 2.5-5.0%. Before bottling, you can optionally enter a flavouring.

The technical results of the invention is to increase the resistance to microbial spoilage beverage, and broadening the range of functional juice drinks.

The method is illustrated by the following examples:

### Example No:1

The process of obtaining a concentrated fruit drink based on liquid pectin starts with blending, for which the liquid pectin with pectin concentrations of not less than 0.5% are mixed with fruit such as apple juice, concentrated with a mass fraction of solids is not less than 65%.

After mixing, the liquid is treated by means of filtration and sent to concentration up to a mass fraction of solids is not less than 14%. After concentration is maintained at 90-95 °C - 30 min., And then quickly cooled to 25°C.

Then use the dosing device under aseptic conditions, the product is packaged in a sealed container. Thanks to the bactericidal features of pectin (LV Donchenko pectin and pectin Technology - Moscow, New Delhi, 2000. - 255.), inhibited the activity of fungi and bacteria, and there is no damage to the product. The resulting fruit juice beverage on the basis of liquid pectin has the following quality parameters: the mass fraction of soluble solids - 14.5%, mass fraction of pectin - 4.65% titratable acidity in terms of malic acid - 5,48.

When storing a drink based on fruit juices that have not been pasteurized and contain no preservatives, after opening the package there are various changes and spoilage of the product: mould on the surface (mostly in beverages with pulp), acetic fermentation, noted by smell (based drinks cherry, apple juice, etc.), turbidity, colony formation in the liquid (fruit-based drinks grape juice), etc. Sometimes these changes occur in the same drink at the same time in the process of deterioration.

Depending on the content of the liquid pectin and fruit shelf life of different drinks, and with increasing concentration of pectin increases the life of the work product. However, increasing the concentration of pectin to 7% is undesirable because may disrupt the structural stability of the beverage and reduced functional orientation of finished beverage. Some beverages (for example, on the basis of raspberry, cranberry, apple juice) turbidity appears at once, in others (eg, based on cherry, plum juice) - and even the dregs cake is formed in a long time. In this case, requires additional technological steps required- ultrafiltration, exposure blending and filtering the mixture to remove the precipitated fraction, which increases the cost of production of concentrated beverage. The high content of pectin-based with its concentration, causes a reduction of its molecular weight in its molecules and impairment of its physiological features.

### Example 2.

The process of obtaining a concentrated berry drink based on liquid pectin starts with blending, for which the liquid pectin with pectin concentrations of at least 0.8% is mixed with berries, such as blackcurrant juice, concentrated with a mass fraction of solids of at least 60%.

After mixing and filtering the liquid sent to concentration up to a mass fraction of solids is not less than 14%. After concentration is maintained at 90-95 °C - 40 min., And then quickly cooled to 25 °C.

Then by using the dosing device under aseptic conditions, the product is packaged in a sealed container. The resulting fruit juice beverage on the basis of liquid pectin has the following quality parameters: the mass fraction of soluble solids - 15.5%, mass fraction of pectin - 4.05% titratable acidity in terms of malic acid - 4,48.

### Example 3.

Preparation of concentrated beverage, based on vegetable juice and liquid pectin begins with blending liquid pectin with pectin concentration of not less than 1.0% and then are mixed with vegetable components, such as tomato paste with a mass fraction of solids is not less than 35%.

After mixing, filtration and concentration to a mass fraction of solids of at least 15% of the liquid is directed to the exposure at 90-95 °C - 20 min., And then rapidly cooled to 20 °C.

The product has the following quality parameters: the mass fraction of soluble solids - 16.5%, mass fraction of pectin - 3.75%.

Thus, the proposed method provides a basis for concentrated tomato pectin beverage with improved organoleptic and stable during storage.

### Example 4.

### Getting fruity - berry drink concentrate.

Liquid pectin with pectin concentrations of not less than 0.5% are mixed with fruit such as apple juice, concentrated with a mass fraction of solids of at least 65%, and berry, for example, grape juice, concentrated with a mass fraction of solids is not less than 65%.

After mixing and filtering the liquid sent to concentration up to a mass fraction of solids of at least 15%. After concentration is maintained at 90-95 °C - 30 min., And then quickly cooled to 25 °C.

Then use the dosing device under aseptic conditions, the product is packaged in a hermetically sealed container.

The resulting fruit juice beverage on the basis of liquid pectin has the following quality parameters: the mass fraction of soluble solids - 16% mass fraction of pectin - 4.75% titratable acidity in terms of malic acid - 5,18.

Thus, the proposed method allows for the existing technology to get a variety of products to simplify the technology of juice concentrated juice, to ensure quality and safety of beverages. In addition, the use of pectin eliminates the use of synthetic preservatives - sorbic or benzoic acids or their salts. The drink takes on the taste and aroma, typical of that used juice without the introduction of flavours, thanks to the high molecular weight pectin molecule.

### Use: in the soft drink industry.

The inventive method comprises blending a certain ratio of liquid pectin, fruit or vegetable juice concentrate blending the mixture, filling into containers and packaging. Before filling flavours can be introduced. The method provides a simplified technology ensures quality, microbiological stability and diversification of such beverages. In addition, rounded flavour. The drink takes on the taste and aroma characteristic of juice, put into his recipe, without adding flavour.

## Claims

1. Method of production of concentrated juice based liquid pectin, providing mixing of the components, concentration, bottling and packaging in a container, **characterized in that**, the concentrated juice to concentrate the basis for introducing a liquid drink mix pectin to its content in the final product 2.5-5, 0%.

2. The method according to claim 1, **characterized in that**, before filling in addition administered in a concentrated fruit juice drink flavours.
